# EUROPEAN PATENT APPLICATION

(11) **EP 4 465 748 A1**
(43) Date of publication of application: **20.11.2024**
(21) Application number: 22917908.0
(22) Date of filing: 10.01.2022
(51) Int. Cl.: H04W 76/00

(54) **SESSION RELEASE METHOD AND APPARATUS, AND STORAGE MEDIUM**

(71) Applicant: Beijing Xiaomi Mobile Software Co., Ltd., Beijing 100085 (CN)
(72) Inventor: CHEN, Dong, Beijing 100085 (CN); SUN, Yuze, Beijing 100085 (CN)
(74) Representative: Gunzelmann, Rainer
(86) International application number: PCT/CN2022/070970
(87) International publication number: WO 2023/130436

(57) **Abstract**

Provided in the present disclosure are a session release method and apparatus, and a storage medium. The method comprises: in response to receiving an AI session release request message, which is sent by a terminal, sending the AI session release request message to an SMF device; sending an N2 resource release request message to an RAN on the basis of an AI session release response message, which is returned by the SMF device; performing AI session release update with the SMF device on the basis of an N2 resource release response message, which is returned by the RAN; after receiving an AI session release state notification message, which is sent by the SMF device, sending to the terminal an AI session release result, which is comprised in the AI session release state notification message; and in response to receiving a confirmation message, which is sent by the terminal on the basis of the AI session release result and is used for confirming that AI session release has been completed, determining that AI session release has been completed. By means of the present disclosure, an AI session can be released after the use of an AI function service is completed, thereby improving the reliability and security of releasing the AI service.

## Description

### TECHNICAL FIELD

The disclosure relates to the field of communication technologies, in particular to session release methods and session release apparatuses, and a storage medium.

### BACKGROUND

Artificial Intelligence (AI) may become one of the core future communication technologies. The typical application scenarios of 6th generation (6G) mobile networks and AI are overlapped by more than 80%, and the two are deeply integrated. Moreover, the massive coverage of 6G networks may provide ubiquitous bearing space for AI, which solves the problem of lack of carriers and channels for the landing of AI technologies and has greatly promoted the development and prosperity of the AI industry.

Currently, many automated means have been adopted in the planning, construction, maintenance and optimization stages of the network to improve the operation and maintenance efficiency, but the overall level of network autonomy is still not high and may be further improved. The architectures of Software Defined Network (SDN) and Network Functions Virtualization (NFV) make the network highly flexible but also more complex. There are more factors to consider in aspects such as allocation of network resources, transmission paths, and optimization algorithm design, and more intelligent means are needed. The AI technology may help networks achieve a higher level of autonomy, reduce costs and increase efficiency. Since the AI technology was applied to communication networks relatively late, existing network intelligent applications are optimized and transformed on the traditional network architecture and are generally plug -in applications. The lack of a common AI workflow and a unified technical framework has led to fragmented network AI application scenarios and stove-piped research and development, network AI functions are simply superimposed on the existing network processes, and it is difficult to collaborate on cross-domain and cross-layer intelligent applications. Through the addition of AI as an independent Network Function (NF) to the core network architecture, a complete set of processes for obtaining AI services is designed, which is tightly coupled with the network processes, in order to provide a reliable and systematic AI service capability, and to realize a new intelligent network system based on AI. A complete set of AI service processes includes registration, application, update, and release, and requires the collaboration of multiple network elements.

### SUMMARY

To overcome the problems in the related art, embodiments of the disclosure provide session release methods and session release apparatuses, and a storage medium.

According to a first aspect of embodiments of the disclosure, a session release method, performed by an Access and Mobility Management Function (AMF) device, is provided. The method includes:
in response to receiving an Artificial Intelligence (AI) session release request message sent by a terminal, sending the AI session release request message to a Session Management Function (SMF) device;
sending, based on an AI session release response message returned by the SMF device, an N2 resource release request message to a Radio Access Network (RAN), in which the N2 resource release request message at least includes a first resource release request message, and the first resource release request message is used to request the RAN to release resources for an AI session between the RAN and the terminal;
performing an AI session release update with the SMF device based on an N2 resource release response message returned by the RAN;
after receiving an AI session release status notification message sent by the SMF device, sending an AI session release result included in the AI session release status notification message to the terminal; and
in response to receiving an acknowledgement message, sent based on the AI session release result by the terminal, for acknowledging that release of an AI session is completed, determining that the AI session release is completed.

In some embodiments, the AI session release request message includes an AI session identifier of an AI session to be released or an AI session group identifier of an AI session group to be released.

In some embodiments, the AI session release request message further includes AI session association information of the AI session to be released.

In some embodiments, sending the AI session release request message to the SMF device includes:
sending an AI session context release request message to the SMF device by calling a session context update request service, corresponding to an AI function, of the SMF device, in which the AI session context release request message includes the AI session release request message that has been sent by the terminal to the AMF device.

In some embodiments, the AI session release response message includes at least two containers, the at least two containers are used to carry the first resource release request message and a second resource release request message respectively, and the second resource release request message is used to request the terminal to release resources for the AI session between the terminal and the RAN;
the N2 resource release request message includes the second resource release request message that is sent by the SMF device to the AMF device.

In some embodiments, after performing the AI session release update with the SMF device based on the N2 resource release response message returned by the RAN, the method further includes:
in response to receiving an N2 uplink Non-Access Stratum (NAS) transport message from the RAN, re-performing the AI session release update with the SMF device, in which the N2 uplink NAS transport message includes the AI session resource release ACK message sent by the terminal.

In some embodiments, performing the AI session release update with the SMF device based on the N2 resource release response message returned by the RAN includes:
sending an AI session context update request message to the SMF device, in which the AI session context update request message includes a container for carrying the N2 resource release response message; and
receiving an AI session context update response message returned by the SMF device, in which the AI session context update response message is used to indicate that the SMF device has received an indication for performing a session update service.

According to a second aspect of embodiments of the disclosure, a session release method, performed by a session management function (SMF) device, is provided. The method includes:
in response to receiving an Artificial Intelligence (AI) session release request message sent by an Access and Mobility Management Function (AMF) device, sending an AI session release response message to the AMF device, in which the AI session release request message is sent by a terminal to the AMF device;
performing an AI session release update with the AMF device; and
sending a release notification message to a Unified Data Management (UDM) device after sending an AI session release status notification message to the AMF device, in which the AI session release status notification message includes an AI session release result, and the release notification message is used to trigger the UDM device to release data related to an AI session.

In some embodiments, the AI session release request message includes an AI session identifier of an AI session to be released or an AI session group identifier of an AI session group to be released.

In some embodiments, the AI session release request message further includes AI session association information of an AI session to be released.

In some embodiments, the AI session release response message includes at least two containers, the at least two containers are used to carry a first resource release request message and a second resource release request message respectively, the first resource release request message is used to request a Radio Access Network (RAN) to release resources for an AI session between the RAN and the terminal, and the second resource release request message is used to request the terminal to release resources for the AI session between the terminal and the RAN.

In some embodiments, performing the AI session release update with the AMF device includes:
receiving an AI session context update request message sent by the AMF device, in which the AI session context update request message includes a container for carrying an N2 resource release response message, the N2 resource release response message is sent by the RAN to the AMF device; and
sending an AI session context update response message to the SMF device, in which the AI session context update response message is used to indicate that the SMF device has received an indication for performing a session update service.

In some embodiments, the AI session release update are performed with the AMF device at least two times.

According to a third aspect of embodiments of the disclosure, a session release method, performed by a Radio Access Network (RAN), is provided. The method includes:
receiving an N2 resource release request message sent by an Access and Mobility Management Function (AMF) device, in which the N2 resource release request message at least includes a first resource release request message, and the first resource release request message is used to request the RAN to release resources for an AI session between the RAND and a terminal;
releasing the resources for the AI session between the RAN and the terminal based on the first resource release request message; and
sending an N2 resource release response message to the AMF device after releasing the resources for the AI session between the RAN and the terminal.

In some embodiments, the N2 resource release request message further includes a second resource release request message that has been sent by a Session Management Function (SMF) device to the AMF device, the second resource release request message is used to request the terminal to release the resources for the AI session between the terminal and the RAN;
the method further includes:
sending the second resource release request message to the terminal; and
in response to receiving an AI session resource release acknowledgement (ACK) message returned based on the second resource release request message by the terminal, sending an N2 uplink Non-Access Stratum (NAS) transport message to the AMF device, in which the N2 uplink NAS transport message includes the AI session resource release ACK message that has been sent by the terminal to the RAN.

According to a fourth aspect of embodiments of the disclosure, a session release method, performed by a terminal, is provided. The method includes:
in response to determining that use of an Artificial Intelligence (AI) function service is completed, sending an AI session release request message to an Access and Mobility Management Function (AMF) device;
after receiving a second resource release message sent by a Radio Access Network (RAN), releasing resources for an AI session between the terminal and the RAN, in which the second resource release message is used to request the terminal to release the resource for the AI session between the terminal and the RAN;
after releasing the resources for the AI session between the terminal and the RAN, sending an AI session resource release acknowledgement (ACK) message to the RAN; and
in response to receiving an AI session release result sent by the AMF device, sending an acknowledgement message for acknowledging that release of the AI session is completed to the AMF device.

In some embodiments, the AI session release request message includes an AI session identifier of an AI session to be released or an AI session group identifier of an AI session group to be released.

In some embodiments, the AI session release request message further includes AI session association information of an AI session to be released.

According to a fifth aspect of embodiments of the disclosure, a session release apparatus, applied to an Access and Mobility Management Function (AMF) device, is provided. The apparatus includes:
a first sending module, configured to, in response to receiving an Artificial Intelligence (AI) session release request message sent by a terminal, send the AI session release request message to a Session Management Function (SMF) device;
a second sending module, configured to send, based on an AI session release response message returned by the SMF device, send an N2 resource release request message to a Radio Access Network (RAN), in which the N2 resource release request message at least includes a first resource release request message, and the first resource release request message is used to request the RAN to release resources for an AI session between the RAN and the terminal;
a first session release update module, configured to perform an AI session release update with the SMF device based on an N2 resource release response message returned by the RAN;
a third sending module, configured to, after receiving an AI session release status notification message sent by the SMF device, send an AI session release result included in the AI session release status notification message to the terminal; and
a determining module, configured to, in response to receiving an acknowledgement message, sent based on an AI session release result by the terminal, for acknowledging that the release of the AI session is completed, determine that the AI session release is completed.

According to a sixth aspect of embodiments of the disclosure, a session release apparatus, applied to a Session Management Function (SMF), is provided. The apparatus includes:
a fourth sending module, configured to, in response to receiving an Artificial Intelligence (AI) session release request message sent by an Access and Mobility Management Function (AMF) device, send an AI session release response message to the AMF device, in which the AI session release request message is sent by a terminal to the AMF device;
a second session release update module, configured to perform an AI session release update with the AMF device; and
a fifth sending module, configured to send a release notification message to a Unified Data Management (UDM) device after sending an AI session release status notification message to the AMF device, in which the AI session release status notification message includes an AI session release result, and the release notification message is used to trigger the UDM device to release data related to AI session.

According to a seventh aspect of embodiments of the disclosure, a session release apparatus, applied to a Radio Access Network (RAN), is provided. The apparatus includes:
a first receiving module, configured to receive an N2 resource release request message sent by an Access and Mobility Management Function (AMF) device, in which the N2 resource release request message at least includes a first resource release request message, and the first resource release request message is used to request the RAN to release resources for an AI session between the RAN and a terminal;
a first resource release module, configured to release the resources for the AI session between the RAN and the terminal based on the first resource release request message; and
a sixth sending module, configured to send an N2 resource release response message to the AMF device after releasing the resources for the AI session between the RAN and the terminal.

According to an eighth aspect of embodiments of the disclosure, a session release apparatus, applied to a terminal, is provided. The apparatus includes:
a seventh sending module, configured to, in response to determining that use of an Artificial Intelligence (AI) function service is completed, send an AI session release request message to an Access and Mobility Management Function (AMF) device;
a second resource release module, configured to, after receiving a second resource release message sent by a Radio Access Network (RAN), release resources for an AI session between the terminal and the RAN, in which the second resource release message is used to request the terminal to release the resource for the AI session between the terminal and the RAN;
an eighth sending module, configured to, after releasing the resources for the AI session between the terminal and the RAN, send an AI session resource release acknowledgement (ACK) message to the RAN; and
a ninth sending module, configured to, in response to receiving an AI session release result sent by the AMF device, send an acknowledgement message for acknowledging that the release of the AI session is completed to the AMF device.

According to a ninth aspect of embodiments of the disclosure, a computer readable storage medium is provided. The storage medium has a computer program stored thereon. The computer program is used to implement the session release method of any embodiment on the AMF device side.

According to a tenth aspect of embodiments of the disclosure, a computer readable storage medium is provided. The storage medium has a computer program stored thereon. The computer program is used to implement the session release method of any embodiment on the SMF device side.

According to an eleventh aspect of embodiments of the disclosure, a computer readable storage medium is provided. The storage medium has a computer program stored thereon. The computer program is used to implement the session release method of any embodiment on the RAN side.

According to a twelfth aspect of embodiments of the disclosure, a computer readable storage medium is provided. The storage medium has a computer program stored thereon. The computer program is used to implement the session release method of any embodiment on the terminal side.

According to a thirteenth aspect of embodiments of the disclosure, a session release device is provided. The device includes:
a processor; and
a memory for storing instructions executable by the processor;
in which the processor is configured to execute the executable instructions to implement the session release method of any embodiment on the AMF device side.

According to a fourteenth aspect of embodiments of the disclosure, a session release device is provided. The device includes:
a processor; and
a memory for storing instructions executable by the processor;
in which the processor is configured to execute the executable instructions to implement the session release method of any embodiment on the SMF device side.

According to a fifteenth aspect of embodiments of the disclosure, a session release device is provided. The device includes:
a processor; and
a memory for storing instructions executable by the processor;
in which the processor is configured to execute the executable instructions to implement the session release method of any embodiment on the RAN side

According to a sixteenth aspect of embodiments of the disclosure, a session release device is provided. The device includes:
a processor; and
a memory for storing instructions executable by the processor;
in which the processor is configured to execute the executable instructions to implement the session release method of any embodiment on the terminal side.

The technical solutions according to embodiments of the disclosure may include the following beneficial effects.

The disclosure may release the AI session after completing the use of the AI function service to release the network resources corresponding to the AI service for use by other terminals, which improves the reliability and security of releasing the AI service.

It is understandable that the foregoing general description and the following detailed description are exemplary and explanatory only and cannot limit the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of embodiments of the disclosure.
FIG. 1 is a flowchart illustrating a session release method according to an exemplary embodiment.
FIG. 2 is a flowchart illustrating another session release method according to an exemplary embodiment.
FIG. 3 is a flowchart illustrating still another session release method according to an exemplary embodiment.
FIG. 4 is a flowchart illustrating yet another session release method according to an exemplary embodiment.
FIG. 5 is a flowchart illustrating yet another session release method according to an exemplary embodiment.
FIG. 6 is a flowchart illustrating yet another session release method according to an exemplary embodiment.
FIG. 7 is a flowchart illustrating yet another session release method according to an exemplary embodiment.
FIG. 8 is a flowchart illustrating yet another session release method according to an exemplary embodiment.
FIG. 9 is a flowchart illustrating yet another session release method according to an exemplary embodiment.
FIG. 10 is a block diagram illustrating yet a session release apparatus according to an exemplary embodiment.
FIG. 11 is a block diagram illustrating another session release apparatus according to an exemplary embodiment.
FIG. 12 is a block diagram illustrating still another session release apparatus according to an exemplary embodiment.
FIG. 13 is a block diagram illustrating yet another session release apparatus according to an exemplary embodiment.
FIG. 14 is a schematic diagram illustrating a session release device according to an exemplary embodiment of the disclosure.
FIG. 15 is a schematic diagram illustrating another session release device according to an exemplary embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit embodiments of the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein may be interpreted as "when", "while" or "in response to determining".

A session release method according to the disclosure is first described below from the perspective of an Access and Mobility Management Function (AMF) device.

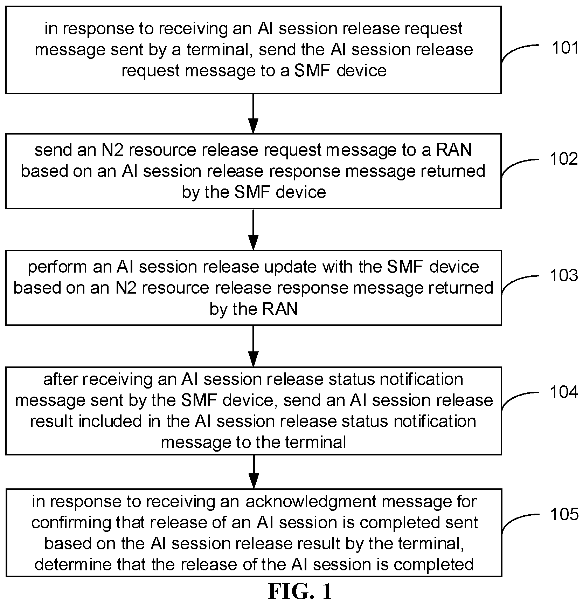

Embodiments of the disclosure provide a session release method, as illustrated in FIG. 1. FIG. 1 is a flowchart illustrating a session release method according to an embodiment. The method is performed by an AMF device. The method includes the following.

At step 101, in response to receiving an Artificial Intelligence (AI) session release request message sent by a terminal, the AI session release request message is sent to a Session Management Function (SMF) device.

In embodiments of the disclosure, the AI session release request message is used to request a release of an AI session.

In a possible implementation, the AI session release request message may include an AI session identifier of an AI session to be released or an AI session group identifier of an AI session group to be released.

In another possible implementation, the AI session release request message may include an AI session identifier of an AI session to be released or an AI session group identifier of an AI session group to be released. In addition, the AI session release request message may also include AI session association information of an AI session to be released. In some examples, the AI session association information may include resources to be released, so that the network side device may subsequently determine the specific resources that the network side device needs to release, thereby improving the efficiency of releasing the AI session.

In embodiments of the disclosure, the AMF device may call a session context update request service Nsmf_AISession_UpdateSMContext Request, corresponding to an AI function, on a Session Management Function (SMF) device to send the AI session context release request message to the SMF device.

The AI session context release request message may include the AI session release request message that has been sent by the terminal to the AMF device, and thus the AI session release request message sent by the terminal may be transparently transmitted to the SMF device via the AMF device.

At step 102, an N2 resource release request message is sent to a Radio Access Network (RAN), based on an AI session release response message returned by the SMF device.

In embodiments of the disclosure, the SMF device returns the AI session release response message, i.e., Nsmf_AISession_UpdateSMContext Response, to the AMF device.

In a possible implementation, the AI session release response message may include at least two containers. The at least two containers are used to carry the first resource release request message and a second resource release request message, respectively. The first resource release request message is used to request the RAN to release resources for an AI session between the RAN and the terminal, and the second resource release request message is used to request the terminal to release resources for an AI session between the terminal and the RAN.

In detail, the AI session release response message may include two containers, i.e., N1 and N2. The N2 container carries a first resource release request to be sent to the RAN, and the N1 container carries a second resource release request to be sent to the terminal.

In embodiments of the disclosure, the N2 resource release request message at least includes the first resource release request message described above. In some examples, the N2 resource release request message may also include the above-described second resource release request message. Therefore, the purpose of transparently transmitting the above-described first resource release request message and the second resource release request message to the SMF device via the AMF device may be realized.

At step 103, an AI session release update is performed with the SMF device based on an N2 resource release response message returned by the RAN.

In embodiments of the disclosure, after releasing the resources for the AI session between the RAN and the terminal, the RAN may return the N2 resource release response message to the AMF device. The AMF device may perform, based on the N2 resource release response message, the AI session release update with the SMF device to update the AI session release status.

At step 104, after receiving an AI session release status notification message sent by the SMF device, an AI session release result included in the AI session release status notification message is sent to the terminal.

In embodiments of the disclosure, the AMF device may receive the AI session release status notification message sent by the SMF device after performing the AI session release update with the SMF device. The AI session release status notification message may be Nsmf_AISession_SMContextStatusNotify, and this message may include the AI session release result.

At step 105, in response to receiving an acknowledgement message, sent based on the AI session release result by the terminal, for acknowledging that release of an AI session is completed, it is determined that the release of the AI session is completed.

In embodiments of the disclosure, after the AMF device receives the acknowledgement message returned by the terminal, the AMF device determines that the AI session has been released and the connection of the corresponding AI function has been relieved, i.e., the release of the AI session has been completed.

In the above embodiments, the purpose of releasing the AI session is realized, thereby improving the reliability and security of releasing the AI service.

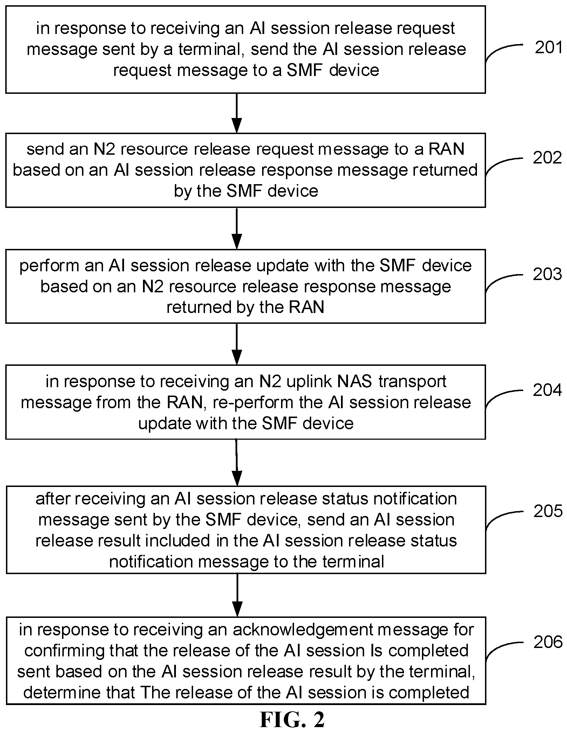

In some optional embodiments, as illustrated in FIG. 2, FIG. 2 is a flowchart illustrating another session release method according to an embodiment. The method is applied to an AMF device. The method may include the following.

At step 201, in response to receiving an AI session release request message sent by a terminal, the AI session release request message is sent to a SMF device.

In embodiments of the disclosure, the AI session release request message is used to request a release of an AI session.

In a possible implementation, the AI session release request message may include an AI session identifier of an AI session to be released or an AI session group identifier of an AI session group to be released.

In another possible implementation, the AI session release request message may include an AI session identifier of an AI session to be released or an AI session group identifier of an AI session group to be released, and the AI session release request message may also include AI session association information of an AI session to be released. In some examples, the AI session association information may include resources to be released, so that the network side device may determine the specific resources that the network side device needs to release, thereby improving the efficiency of releasing the AI session.

In embodiments of the disclosure, the AMF device may call a session context update request service Nsmf_AISession_UpdateSMContext Request, corresponding to an AI function, on the SMF device, to send the AI session context release request message to the SMF device.

The AI session context release request message may include the AI session release request message sent by the terminal to the AMF device, and thus the AI session release request message sent by the terminal may be transparently transmitted to the SMF device via the AMF device.

At step 202, an N2 resource release request message is sent to a RAN based on an AI session release response message returned by the SMF device.

In embodiments of the disclosure, the SMF device may return the AI session release response message, i.e., Nsmf_AISession_UpdateSMContext Response message, to the AMF device.

In a possible implementation, the AI session release response message may include at least two containers. The at least two containers are used to carry the first resource release request message and a second resource release request message, respectively. The first resource release request message is used to request the RAN to release resources for an AI session between the RAN and the terminal, and the second resource release request message is used to request the terminal to release resources for an AI session between the terminal and the RAN.

In detail, the AI session release response message may include two containers, i.e., N1 container and N2 container. The N2 container carries a first resource release request to be sent to the RAN, and the N1 container carries a second resource release request to be sent to the terminal.

In embodiments of the disclosure, the N2 resource release request message at least includes the first resource release request message described above. In some examples, the N2 resource release request message may also include the above-described second resource release request message. Therefore, the purpose of transparently transmitting the above-described first resource release request message and the second resource release request message to the SMF device via the AMF device may be realized.

At step 203, an AI session release update is performed with the SMF device based on an N2 resource release response message returned by the RAN.

In embodiments of the disclosure, after releasing the resources for the AI session between the RAN and the terminal, the RAN may return the N2 resource release response message to the AMF device. The AMF device may perform the AI session release update with the SMF device based on the N2 resource release response message, to update the AI session release status.

At step 204, in response to receiving an N2 uplink non-access stratum (NAS) transport message from the RAN, the AI session release update is re-performed with the SMF device.

In embodiments of the disclosure, the N2 uplink NAS transport message includes an AI session resource release acknowledgement message sent by the terminal. The AI session resource release acknowledgement (ACK) message may be a Packet Data Unit (PDU) session release ACK message.

In response to receiving the N2 uplink NAS transport message sent by the RAN, after the AMF device determines that the terminal has also released resources for an AI session between the terminal and the RAN, the AMF device performs the AI session release update again to update the AI session release status.

At step 205, after receiving an AI session release status notification message sent by the SMF device, an AI session release result included in the AI session release status notification message is sent to the terminal.

In embodiments of the disclosure, after performing the AI session release update with the SMF device, the AMF device may receive the AI session release status notification message sent by the SMF device. The AI session release status notification message may be the Nsmf_AISession_SMContextStatusNotify message, and this message may include the AI session release result.

At step 206, in response to receiving an acknowledgement message, sent based on the AI session release result by the terminal, for acknowledging that the release of the AI session is completed, it is determined that the release of the AI session is completed.

In embodiments of the disclosure, after the AMF receives the acknowledgement message returned by the terminal, the AMF determines that the AI session has been released and the connection of the corresponding AI function has been relieved, i.e., the release of the AI session has been completed.

In the above embodiment, a manner that the AI session release update is performed multiple times may be adopted on the AMF device side to ensure the reliability and security of releasing the AI session.

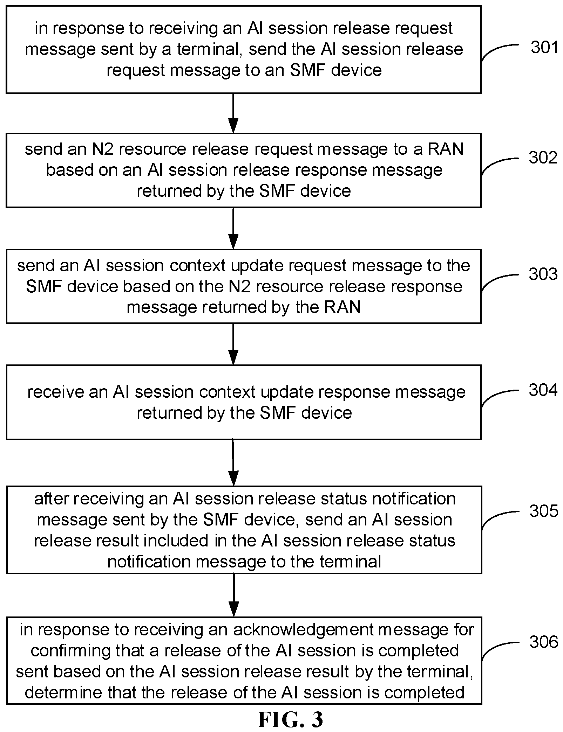

In some optional embodiments, as illustrated in FIG. 3, FIG. 3 is a flowchart illustrating a session release method according to an embodiment. The method is performed by an AMF device. The method may include the following.

At step 301, in response to receiving an AI session release request message sent by a terminal, the AI session release request message is sent to an SMF device.

In embodiments of the disclosure, the AI session release request message is used to request a release of an AI session.

In a possible implementation, the AI session release request message may include an AI session identifier of an AI session to be released or an AI session group identifier of an AI session group to be released.

In another possible implementation, the AI session release request message may include an AI session identifier of an AI session to be released or an AI session group identifier of an AI session group to be released, and the AI session release request message may also include AI session association information of an AI session to be released. In some examples, the AI session association information may include resources to be released, so that the network side device may determine the specific resources that the network side device needs to release, thereby improving the efficiency of releasing the AI session.

In embodiments of the disclosure, the AMF device may call a session context update request service Nsmf_AISession_UpdateSMContext Request, corresponding to an AI function, on the SMF device, to send the AI session context release request message to the SMF device.

The AI session context release request message may include the AI session release request message that has been sent by the terminal to the AMF device, and thus the AI session release request message sent by the terminal may be transparently transmitted to the SMF device via the AMF device.

At step 302, an N2 resource release request message is sent to a RAN based on an AI session release response message returned by the SMF device.

In embodiments of the disclosure, the SMF device returns the AI session release response message, i.e., Nsmf_AISession_UpdateSMContext Response message, to the AMF device.

In a possible implementation, the AI session release response message may include at least two containers. The at least two containers are used to carry the first resource release request message and a second resource release request message, respectively. The first resource release request message is used to request the RAN to release resources for an AI session between the RAN and the terminal, and the second resource release request message is used to request the terminal to release resources for the AI session between the terminal and the RAN.

In detail, the AI session release response message may include two containers, i.e., N1 container and N2 container. The N2 container carries a first resource release request to be sent to the RAN, and the N1 container carries a second resource release request to be sent to the terminal.

In embodiments of the disclosure, the N2 resource release request message at least includes the first resource release request message described above. In some examples, the N2 resource release request message may also include the above-described second resource release request message. Therefore, the purpose of transparently transmitting the above-described first resource release request message and the second resource release request message to the SMF device via the AMF device may be realized.

At step 303, an AI session context update request message is sent to the SMF device based on the N2 resource release response message returned by the RAN.

In embodiments of the disclosure, after releasing the resources for the AI session between the RAN and the terminal, the RAN may return an N2 resource release response message to the AMF device. The AMF device may send an AI session context update request message, i.e. Nsmf_AISession_UpdateSMContext Request message, based on the N2 resource release response message to the SMF device, for AI session release update.

In a possible implementation, the AI session context update request message includes a container for carrying the N2 resource release response message.

At step 304, an AI session context update response message returned by the SMF device is received.

In embodiments of the disclosure, after the SMF receives the AI session context update request message, the SMF device may send an AI session context update response message, i.e., Nsmf_AISession_UpdateSMContext Response, to the AMF device. The AI session context update response message includes an indication for indicating that the SMF device has received an indication of performing a session service update.

At step 305, after receiving an AI session release status notification message sent by the SMF device, an AI session release result included in the AI session release status notification message is sent to the terminal.

In embodiments of the disclosure, after the AMF device performs the AI session release update with the SMF device, the AMF device may receive an AI session release status notification message sent by the SMF device. The AI session release status notification message may be Nsmf_AISession_SMContextStatusNotify, and this message may include the AI session release result.

At step 306, in response to receiving an acknowledgement message, sent based on the AI session release result by the terminal, for acknowledging that a release of the AI session is completed, it is determined that the release of the AI session is completed.

In above embodiments, the AMF device may perform the AI session release update with the SMF device, thereby ensuring the reliability and security of releasing the AI session.

The session release method according to the disclosure is described below again from the perspective of the SMF device.

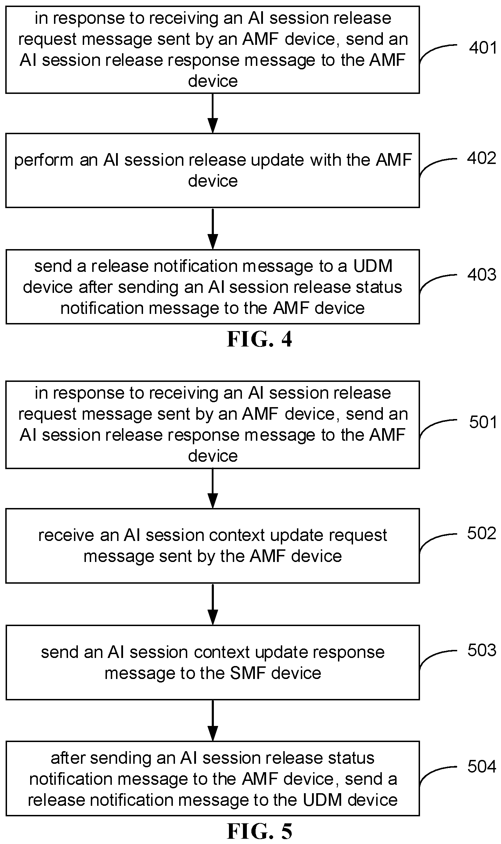

Embodiments of the disclosure provide a session release method as illustrated in FIG. 4. FIG. 4 is a flowchart illustrating a session release method according to an embodiment. The method is performed by a SMF device. The method may include the following.

At step 401, in response to receiving an AI session release request message sent by an AMF device, an AI session release response message is sent to the AMF device.

In embodiments of the disclosure, the AI session release request message is used to request a release of an AI session, which is sent by the terminal to the AMF device and then transparently sent by the AMF device to the SMF device.

In a possible implementation, the AI session release request message may include an AI session identifier of an AI session to be released or an AI session group identifier of an AI session group to be released.

In another possible implementation, the AI session release request message may include an AI session identifier of an AI session to be released or an AI session group identifier of an AI session group to be released, and the AI session release request message may also include AI session association information of an AI session to be released. In some examples, the AI session association information may include resources to be released, so that the network side device may determine the specific resources that the network side device needs to release, thereby improving the efficiency of releasing the AI session.

In embodiments of the disclosure, the AI session release response message may be Nsmf_AISession_UpdateSMContext Response, and this message includes at least two containers. The at least two containers are used to carry the first resource release request message and a second resource release request message, respectively. The first resource release request message is used to request the RAN to release resources for an AI session between the RAN and the terminal, and the second resource release request message is used to request the terminal to release resources for an AI session between the terminal and the RAN.

In detail, the AI session release response message may include two containers, i.e., N1 container and N2 container. The N2 container carries a first resource release request to be sent to the RAN, and the N1 container carries a second resource release request to be sent to the terminal.

At step 402, an AI session release update is performed with the AMF device.

In embodiments of the disclosure, the SMF device may perform an AI session release update with the AMF device in a timely manner during the AI session release process.

At step 403, a release notification message is sent to a Unified Data Management (UDM) device after sending an AI session release status notification message to the AMF device.

In embodiments of the disclosure, the SMF device may send an AI session release status notification message to the AMF device after completing the AI session release update and updating the AI session status. The AI session release status notification message may be Nsmf_ AISession_SMContextStatusNotify.

Further, the SMF device may send a release notification message to the UDM device. The release notification message is used to trigger the UDM device to release data related to the AI session, which includes, but is not limited to, data such as computation and training resources related to AI session, and to complete a process of data cancellation or data subscription cancellation.

In above embodiments, the SMF device may send a release notification message to the UDM device after completing the use of the AI function service to release the data related to the AI session on the UDM device, which improves the reliability and security of releasing the AI service and has high availability.

In some optional embodiments, as illustrated in FIG. 5, FIG. 5 is a flowchart illustrating a session release method according to an embodiment. The method is performed by a SMF device. The method may include the following.

At step 501, in response to receiving an AI session release request message sent by an AMF device, an AI session release response message is sent to the AMF device.

At step 502, an AI session context update request message sent by the AMF device is received.

In embodiments of the disclosure, the AMF device may send the AI session context update request message, i.e., Nsmf_AISession_UpdateSMContext Request, to the SMF device for the AI session release update.

In embodiments of the disclosure, the AI session context update request message includes a container for carrying an N2 resource release response message. The N2 resource release response message is sent by the RAN to the AMF device.

In a possible implementation, the AI session context update request message includes a container for carrying the N2 resource release response message, e.g., N2 Resource Release Ack.

At step 503, an AI session context update response message is sent to the SMF device.

After the SMF device receives the AI session context update request message, the SMF device may send the AI session context update response message, i.e., Nsmf_AISession_UpdateSMContext Response, to the AMF device. The AI session context update response message includes an indication for indicating that the SMF device has received an indication for performing a session update service.

At step 504, after sending an AI session release status notification message to the AMF device, a release notification message is sent to the UDM device.

In embodiments of the disclosure, the SMF device may send an AI session release status notification message to the AMF device after completing the AI session release update and updating the AI session status. The AI session release status notification message may be Nsmf_AISession_SMContextStatusNotify.

Further, the SMF device may send a release notification message to the UDM device. The release notification message is used to trigger the UDM device to release data related to the AI session, which includes, but is not limited to, data such as computation and training resources related to AI session, and to complete the process of data cancellati on or data subscription cancellation.

In above embodiments, the SMF device may perform the AI session release update in a timely manner based on interaction with the AMF device, which is easy to implement and has high availability.

In some optional embodiments, the SMF device may perform the AI session release update with the AMF device at least two times to further improve the reliability and security of releasing the AI session.

The process of performing the AI session release update each time may be similar to each other, which is not repeated herein.

The session release method according to the disclosure is described below from the perspective of the RAN.

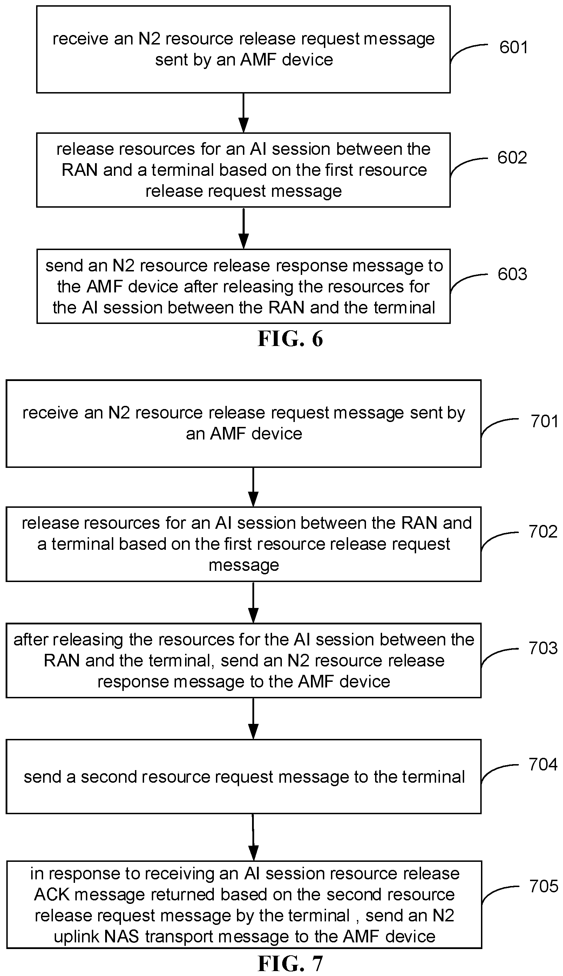

Embodiments of the disclosure provide a session release method as illustrated in FIG. 6. FIG. 6 is a flowchart illustrating a session release method according to an embodiment. The method is performed by a RAN. The method may include the following.

At step 601, an N2 resource release request message sent by an AMF device is received.

In embodiments of the disclosure, the N2 resource release request message at least includes a first resource release request message. The first resource release request message is used to request the RAN to release resources for an AI session between the RAN and a terminal.

At step 602, resources for an AI session between the RAN and a terminal are released based on the first resource release request message.

At step 603, an N2 resource release response message is sent to the AMF device after releasing the resources for the AI session between the RAN and the terminal.

In embodiments of the disclosure, the N2 resource release response message is used to inform the AMF device that the RAN has released the resources for an AI session between the RAN and the terminal.

In above embodiments, the RAN may release the resources for the AI session between the RAN and the terminal based on the first resource release request message sent by the AMF device, so that the released network resources corresponding to the AI service may be used by other terminals, thereby improving the reliability and security for releasing the AI service.

In some optional embodiments, as illustrated in FIG. 7. FIG. 7 is a flowchart illustrating a session release method according to an embodiment. The method is performed by a RAN. The method may include the following.

At step 701, an N2 resource release request message sent by an AMF device is received.

In embodiments of the disclosure, the N2 resource release request message at least includes a first resource release request message. The first resource release request message is used to request the RAN to release resources for an AI session between the RAN and a terminal. The N2 resource release request message also includes a second resource release request message sent by the SMF device to the AMF device. The second resource release request message is used to request the terminal to release resources for the AI session between the terminal and the RAN.

At step 702, resources for an AI session between the RAN and a terminal are released based on the first resource release request message.

At step 703, an N2 resource release response message is sent to the AMF device after releasing the resources for the AI session between the RAN and the terminal.

At step 704, a second resource request message is sent to the terminal.

At step 705, in response to receiving an AI session resource release acknowledgement message returned based on the second resource release request message by the terminal, an N2 uplink NAS transport message is sent to the AMF device.

In embodiments of the disclosure, after receiving a PDU session release ACK message returned by the terminal, the RAN may send the N2 uplink NAS transport message to the AMF device, and the AI session resource release acknowledgement message that is sent by the terminal to the RAN may be transparently transmitted to the AMF device.

In above embodiments, the RAN may transparently transmit the second resource request message sent by the AMF device to the terminal, so that the terminal also releases the resources for the AI session between the terminal and the RAN, which improves the reliability and security for releasing the AI service.

The session release method according to the disclosure is described below from the perspective of the terminal.

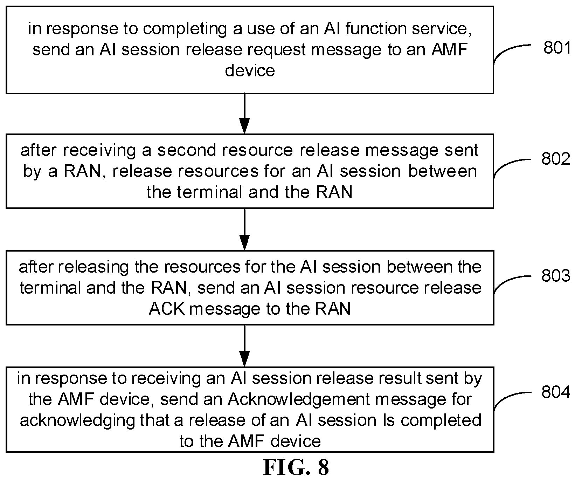

Embodiments of the disclosure provide a session release method as illustrated in FIG. 8. FIG. 8 is a flowchart illustrating a session release method illustrated according to an embodiment. The method may be performed by a terminal. The method may include the following.

At step 801, in response to completing a use of an AI function service, an AI session release request message is sent to an AMF device.

In embodiments of the disclosure, the AI session release request message is used to request a release of an AI session.

In a possible implementation, the AI session release request message may include an AI session identifier of an AI session to be released or an AI session group identifier of an AI session group to be released.

In another possible implementation, the AI session release request message may include an AI session identifier of an AI session to be released or an AI session group identifier of an AI session group to be released, and the AI session release request message may also include AI session association information of an AI session to be released. In some examples, the AI session association information may include resources to be released, so that the network side device may determine the specific resources that the network side device needs to release, thereby improving the efficiency of releasing the AI session.

At step 803, after releasing the resources for the AI session between the terminal and the RAN, an AI session resource release acknowledgement message is sent to the RAN.

In embodiments of the disclosure, the AI session resource release acknowledgement message may be a PDU session release ACK message.

At step 804, in response to receiving an AI session release result sent by the AMF device, an acknowledgement message for acknowledging that a release of an AI session is completed is sent to the AMF device.

In above embodiments, after receiving the AI session release result sent by the AMF device, the terminal may feedback the acknowledgement message to the AMF device, so that the AMF device may determine that the release of the AI session has completed. Therefore, the purpose of releasing the AI session is achieved, thereby improving the reliability and security for releasing the AI service.

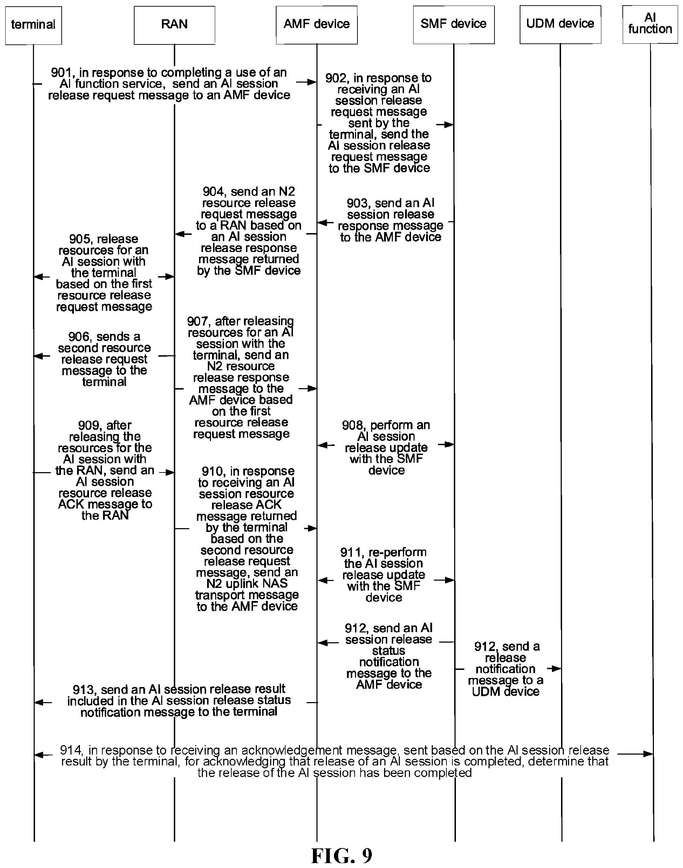

In some optional embodiments, as illustrated in FIG. 9, FIG. 9 is a flowchart illustrating a session release method according to an embodiment. The method includes the following.

At step 901, in response to determining by the terminal that a use of an AI function service is completed, the terminal sends an AI session release request message to an AMF device.

The AI session release request message (AI Session Release Request) is used to request a release of an AI session.

In a possible implementation, the AI session release request message may include an AI session identifier of an AI session to be released or an AI session group identifier of an AI session group to be released.

In another possible implementation, the AI session release request message may include an AI session identifier of an AI session to be released or an AI session group identifier of an AI session group to be released, and the AI session release request message may also include AI session association information of an AI session to be released. In some examples, the AI session association information may include resources to be released, so that the network side device may determine the specific resources the network side device needs to release, thereby improving efficiency of releasing the AI session.

At step 902, in response to receiving by the AMF device an AI session release request message sent by the terminal, the AMF device sends the AI session release request message to the SMF device.

In embodiments of the disclosure, the AMF device may call a session context update request service Nsmf_AISession_UpdateSMContext Request, corresponding to an AI function, on the SMF device, to send the AI session context release request message to the SMF device.

The AI session context release request message may include the AI session release request message that has been sent by the terminal to the AMF device, and thus the AI session release request message sent by the terminal may be transparently transmitted to the SMF device via the AMF device.

At step 903, the SMF device sends an AI session release response message to the AMF device.

In embodiments of the disclosure, the SMF device returns the AI session release response message, i.e., Nsmf_AISession_UpdateSMContext Response, to the AMF device.

In a possible implementation, the AI session release response message may include at least two containers. The at least two containers are used to carry the first resource release request message and a second resource release request message, respectively. The first resource release request message is used to request the RAN to release resources for an AI session between the RAN and the terminal, and the second resource release request message is used to request the terminal to release resources for the AI session between the terminal and the RAN.

In detail, the AI session release response message may include two containers, i.e., N1 container and N2 container. The N2 container carries a first resource release request to be sent to the RAN, and the N1 container carries a second resource release request to be sent to the terminal.

At step 904, the AMF device sends an N2 resource release request message to a RAN based on an AI session release response message returned by the SMF device.

The N2 resource release request message may at least include the first resource release request message described above. In some examples, the N2 resource release request message may also include the above-described second resource release request message. In this way, the purpose of transparently transmitting, through the AMF device, the above-described first resource release request message and the second resource release request message sent by the SMF device is achieved.

At step 905, the RAN releases resources for an AI session between the RAN and the terminal based on the first resource release request message.

At step 906, the RAN sends a second resource release request message to the terminal.

At step 907, after the RAN releases resources for an AI session between the RAN and the terminal based on the first resource release request message, the RAN sends an N2 resource release response message to the AMF device.

At step 908, the AMF device performs an AI session release update with the SMF device.

At step 908a (not illustrated in FIG. 9), the AMF device may send an AI session context update request message, i.e., Nsmf_AISession_UpdateSMContext Request, to the SMF device for the AI session release update.

In embodiments of the disclosure, the AI session context update request message includes a container for carrying an N2 resource release response message, in which the N2 resource release response message is sent by the RAN to the AMF device.

At step 908b (not illustrated in FIG. 9), the SMF device sends an AI session context update response message to the AMF device.

The SMF device may send an AI session context update response message, i.e., Nsmf_AISession_UpdateSMContext Response, to the AMF device, after receiving the AI session context update request message. The AI session context update response message includes an indication for indicating that the SMF device has received an indication for performing a session update service.

At step 909, after the terminal releases the resources for the AI session between the terminal and the RAN, the terminal sends an AI session resource release acknowledgement message to the RAN.

In embodiments of the disclosure, the AI session resource release acknowledgement message may be a PDU session release ACK message.

At step 910, in response to receiving by the RAN an AI session resource release acknowledgement message returned based on the second resource release request message by the terminal, the RAN sends an N2 uplink NAS transport message to the AMF device.

In embodiments of the disclosure, the RAN may send an N2 uplink NAS transport message to the AMF device, after receiving the PDU session release ACK message returned by the terminal. The AI session resource release acknowledgement message sent by the terminal to the RAN is transparently transmitted to the AMF device.

At step 911, in response to receiving by the AMF device an N2 uplink NAS transport message sent by the RAN, the AMF device re-performs the AI session release update with the SMF device.

At step 912, the SMF device sends an AI session release status notification message to the AMF device and then sends a release notification message to a UDM device.

In embodiments of the disclosure, the SMF device may send the AI session release status notification message to the AMF device after completing the AI session release update and updating the AI session status. The AI session release status notification message may be Nsmf_AISession_SMContextStatusNotify. The AI session release status notification message also includes an AI session release result.

The SMF device may send a release notification message to the UDM device. The release notification message is used to trigger the UDM device to release data related to the AI session, which includes, but is not limited to, data such as computation and training resources related to AI session, and to complete the process of data cancellation or data subscription cancellation.

At step 913, the AMF device sends an AI session release result included in the AI session release status notification message to the terminal.

At step 914, in response to receiving by the AMF device an acknowledgement message, sent based on the AI session release result by the terminal, for acknowledging that the release of the AI session is completed, the AMF device determines that the release of the AI session is completed.

In above embodiments, after completing the use of the AI function service, the AI session is released, so that the released network resources corresponding to the AI service may be used by other terminals, thereby improving the reliability and security for releasing the AI service.

Corresponding to the session release methods according to foregoing embodiments, the disclosure provides embodiments of session release apparatuses.

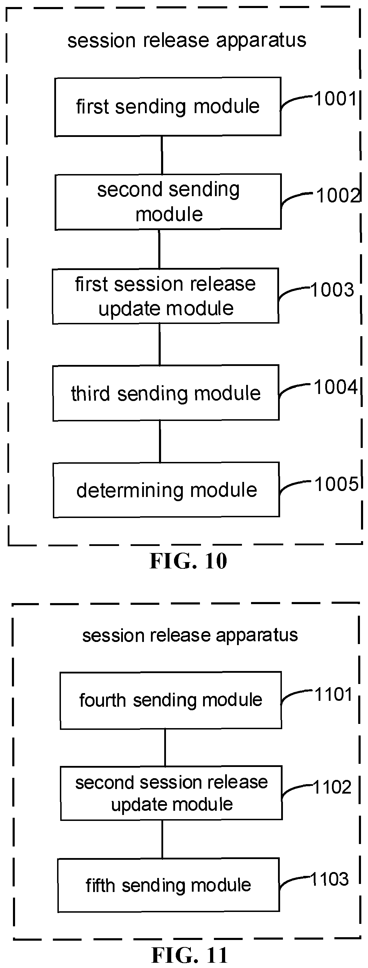

As illustrated in FIG. 10, FIG. 10 is a block diagram illustrating a session release apparatus according to an exemplary embodiment. The apparatus is applied to an AMF device. The apparatus includes a first sending module 1001, a second sending module 1002, a first session release update module 1003, a third sending module 1004, and a determining module 1005.

The first sending module 1001 is configured to, in response to receiving an AI session release request message sent by a terminal, send the AI session release request message to an SMF device.

The second sending module 1002 is configured to send an N2 resource release request message to a RAN based on an AI session release response message returned by the SMF device, in which the N2 resource release request message at least includes a first resource release request message, and the first resource release request message is used to request the RAN to release resources for an AI session between the RAN and the terminal.

The first session release update module 1003 is configured to perform an AI session release update with the SMF device based on an N2 resource release response message returned by the RAN.

The third sending module 1004 is configured to, after receiving an AI session release status notification message sent by the SMF device, send an AI session release result included in the AI session release status notification message to the terminal.

The determining module 1005 is configured to, in response to receiving an acknowledgement message, sent based on the AI session release result by the terminal, for acknowledging that a release of an AI session is completed, determine that the release of the AI session is completed.

In some examples, the AI session release request message further includes AI session association information of an AI session to be released.

In some examples, sending the AI session release request message to the SMF device includes:
calling a session context update request service, corresponding to an AI function, on the SMF device to send an AI session context release request message to the SMF device, in which the AI session context release request message includes the AI session release request message that has been sent by the terminal to the AMF device.

In some examples, the AI session release response message includes at least two containers. The at least two containers are used to carry the first resource release request message and a second resource release request message, respectively. The second resource release request message is used to request the terminal to release resources for an AI session between the terminal and the RAN;
the N2 resource release request message further includes the second resource release request message sent by the SMF device to the AMF device.

The specific implementations are similar to the implementations in FIG. 1, which will not be repeated herein.

In some optional embodiments, the apparatus further includes: a third session release update module.

The third session release update module is configured to, in response to receiving an N2 uplink NAS transport message sent by the RAN, re-perform the AI session release update with the SMF device, in which the N2 uplink NAS transport message includes the AI session resource release acknowledgement message sent by the terminal.

The specific implementations are similar to the implementations in FIG. 2, which will not be repeated herein.

In some optional embodiments, the first session release update module includes: a first sending sub-module and a first receiving sub-module.

The first sending sub-module is configured to send an AI session context update request message to the SMF device, in which the AI session context update request message includes a container for carrying the N2 resource release response message.

The first receiving sub-module is configured to receive an AI session context update response message returned by the SMF device, in which the AI session context update response message is used to indicate that the SMF device has received an indication for performing a session update service.

The specific implementations are similar to the implementations in FIG. 3, which will not be repeated herein.

As illustrated in FIG. 11, FIG. 11 is a block diagram illustrating a session release apparatus according to an exemplary embodiment. The apparatus is applied to a SMF device. The apparatus includes: a fourth sending module 1101; a second session release update module 1102; and a fifth sending module 1103.

The fourth sending module 1101 is configured to, in response to receiving an AI session release request message sent by an AMF device, send an AI session release response message to the AMF device, in which the AI session release request message is sent by a terminal to the AMF device.

The second session release update module 1102 is configured to perform an AI session release update with the AMF device.

The fifth sending module 1103 is configured to send a release notification message to a UDM device after sending an AI session release status notification message to the AMF device, in which the AI session release status notification message includes an AI session release result, and the release notification message is used to trigger the UDM device to release data related to the AI session.

In some examples, the AI session release request message includes an AI session identifier of an AI session to be released or an AI session group identifier of an AI session group to be released.

In some examples, the AI session release request message further includes AI session association information of an AI session to be released.

In some examples, the AI session release response message may include at least two containers. The at least two containers are used to carry the first resource release request message and a second resource release request message, respectively. The first resource release request message is used to request the RAN to release resources for an AI session between the RAN and the terminal, and the second resource release request message is used to request the terminal to release resources for an AI session between the terminal and the RAN.

The specific implementations are similar to the implementations in FIG. 4, which will not be repeated herein.

In some optional embodiments, the second session release update module includes: a second receiving sub-module and a second sending sub-module.

The second receiving sub-module is configured to receive an AI session context update request message sent by the AMF device, in which the AI session context update request message includes a container for carrying an N2 resource release response message, and the N2 resource release response message is sent to the AMF device by a RAN.

The second sending sub-module is configured to send an AI session context update response message to the SMF device, in which the AI session context update response message is used to indicate that the SMF device has received an indication for performing a session update service.

The specific implementations are similar to the implementations in FIG. 5, which will not be repeated herein.

In some examples, the AI session release update is performed with the AMF device at least two times.

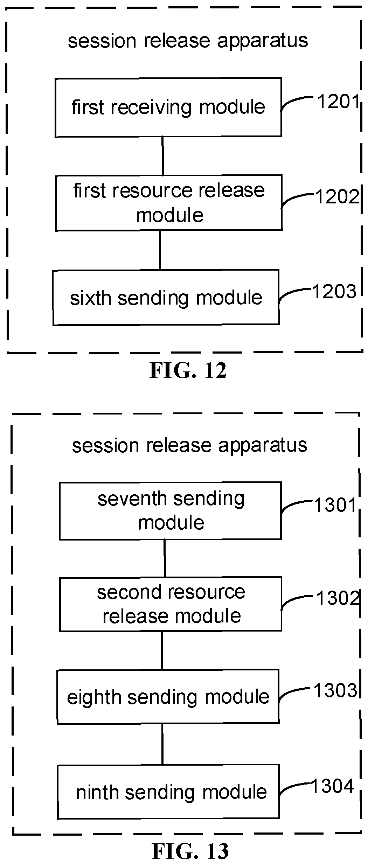

As illustrated in FIG. 12, FIG. 12 is a block diagram illustrating a session release apparatus according to an exemplary embodiment. The apparatus is applied to a RAN. The apparatus includes: a first receiving module 1201, a first resource release module 1202, and a sixth sending module 1203.

The first receiving module 1201 is configured to receive an N2 resource release request message sent by an AMF device, in which the N2 resource release request message at least includes a first resource release request message, the first resource release request message is used to request the RAN to release resources for an AI session between the RAN and a terminal.

The first resource release module 1202 is configured to release the resources for the AI session between the RAN and the terminal based on the first resource release request message.

The sixth sending module 1203 is configured to send an N2 resource release response message to the AMF device after releasing the resources for the AI session between the RAN and the terminal.

The specific implementations are similar to the implementations in FIG. 6, which will not be repeated herein.

In some optional embodiments, the N2 resource release request message includes a second resource release request message that has been sent by an SMF device to the AMF device, the second resource release request message is used to request the terminal to release resources for an AI session between the terminal and the RAN.

The apparatus further includes: a tenth sending module and an eleventh sending module.

The tenth sending module is configured to send the second resource release request message to the terminal.

The eleventh sending module is configured to, in response to receiving an AI session resource release acknowledgement message returned based on the second resource release request message by the terminal, send an N2 uplink NAS transport message to the AMF device, in which the N2 uplink NAS transport message includes the AI session resource release acknowledgement message that has been sent by the terminal to the RAN.

The specific implementations are similar to the implementations in FIG. 7, which will not be repeated herein.

As illustrated in FIG. 13, FIG. 13 is a block diagram illustrating a session release apparatus according to an exemplary embodiment. The apparatus is applied to a terminal. The apparatus includes: a seventh sending module 1301, a second resource release module 1302, an eighth sending module 1303, and a ninth sending module 1304.

The seventh sending module 1301 is configured to, in response to determining a use of an AI function service is completed, send an AI session release request message to an AMF device.

The second resource release module 1302 is configured to, after receiving a second resource release message sent by a RAN, release resources for an AI session between the terminal and the RAN, in which the second resource release message is used to request the terminal to release the resource for the AI session between the terminal and the RAN.

The eighth sending module 1303 is configured to, after releasing the resources for the AI session between the terminal and the RAN, send an AI session resource release acknowledgement message to the RAN.

The ninth sending module 1304 is configured to, in response to receiving an AI session release result sent by the AMF device, send an acknowledgement message for acknowledging that a release of an AI session is completed to the AMF device.

In some examples, the AI session release request message includes an AI session identifier of an AI session to be released or an AI session group identifier of an AI session group to be released.

In some examples, the AI session release request message further includes AI session association information of an AI session to be released.

The specific implementations are similar to the implementations in FIG. 8, which will not be repeated herein.

The apparatus embodiments basically correspond to the method embodiments, the related contents may refer to part of the descriptions of the method embodiments. The above-described apparatus embodiments are merely schematic, the units described above as separate components may or may not be physically separated, and the components displayed as units may or may not be physical units, i.e., the components may be located in one area or may be distributed to multiple network units. Some or all of these modules may be selected according to practical needs to achieve the purpose of the solution of the disclosure. Those skilled in the art may understand and implement the solution without inventive works.

Correspondingly, the disclosure also provides a computer readable storage medium having a computer program stored thereon. The computer program is used to implement the session release methods on the AMF device side.

Correspondingly, the disclosure also provides a computer readable storage medium having a computer program stored thereon. The computer program is used to implement the session release methods on the SMF device side.

Correspondingly, the disclosure also provides a computer readable storage medium having a computer program stored thereon. The computer program is used to implement the session release methods on the RAN side.

Correspondingly, the disclosure also provides a computer readable storage medium having a computer program stored thereon. The computer program is used to implement the session release methods on the terminal side.

Correspondingly, the disclosure also provides a session release device, including:
a processor; and
a memory for storing instructions executable by the processor;
in which the processor is configured to execute the executable instructions to implement the session release methods on the AMF device side.

Correspondingly, the disclosure also provides a session release device, including:
a processor; and
a memory for storing instructions executable by the processor;
in which the processor is configured to execute the executable instructions to implement the session release methods on the SMF device side.

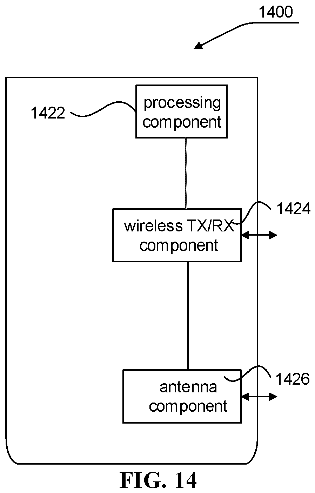

Correspondingly, the disclosure also provides a session release device, including:
a processor; and
a memory for storing instructions executable by the processor;
in which the processor is configured to execute the executable instructions to implement the session release methods on the RAN side. As illustrated in FIG. 14, FIG. 14 is a schematic diagram illustrating a session release device 1400 according to an exemplary embodiment. The device 1400 may be provided as an AMF device, an SMF device, or a RAN. As illustrated in FIG. 14, the device 1400 includes a processing component 1422, a wireless transmitting/receiving component 1424, an antenna component 1426, and a signal processing portion specific to a wireless interface. The processing component 1422 may include at least one processor.

One of the processors in the processing component 1422 may be configured for performing the session release methods described above from the perspective of the AMF device, the SMF device, or the RAN.

Correspondingly, the disclosure also provides a session release device, including:
a processor; and
a memory for storing instructions executable by the processor;
in which the processor is configured to implement the session release methods on the terminal side.

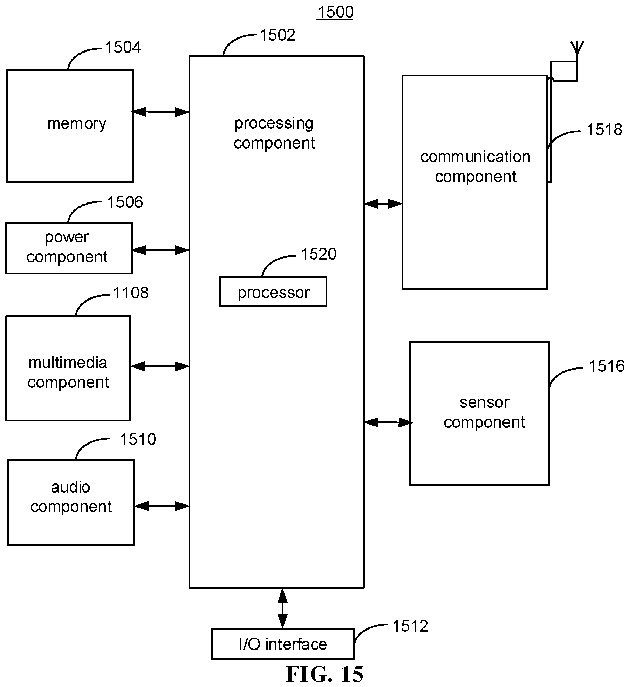

FIG. 15 is a block diagram illustrating a session release device 1500 according to an exemplary embodiment. For example, the device 1500 may be a cell phone, a tablet computer, an e-book reader, a multimedia playback device, a wearable device, an in-vehicle user equipment, an iPad, a smart TV, and other terminals.

As illustrated in FIG. 15, the device 1500 may include one or more of the following components: a processing component 1502, a memory 1504, a power component 1506, a multimedia component 1508, an audio component 1510, an input/output (I/O) interface 1512, a sensor component 1516, and a communication component 1518.

The processing component 1502 typically controls overall operations of the device 1500, such as the operations associated with display, telephone calls, data communications, camera operations, and recording operations. The processing component 1502 may include one or more processors 1520 to perform all or part of the steps in the above described method. Moreover, the processing component 1502 may include one or more modules which facilitate the interaction between the processing component 1502 and other components. For example, the processing component 1502 may include a multimedia module to facilitate the interaction between the multimedia component 1508 and the processing component 1502. For another example, the processing component 1502 may read executable instructions from the memory, to implement the steps of the method provided in the above embodiments.

The memory 1504 is configured to store various types of data to support the operation of the device 1500. Examples of such data include instructions for any applications or methods operated on the device 1500, contact data, phonebook data, messages, pictures, video, etc. The memory 1504 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1506 provides power to various components of the device 1500. The power component 1506 may include a power management system, one or more power sources, and any other components associated with the generation, management, and distribution of power in the device 1500.

The multimedia component 1508 includes a screen providing an output interface between the device 1500 and the user. In some embodiments, the multimedia component 1508 includes a front-facing camera and/or a rear-facing camera. When the device 1500 is in an operating mode, such as a shooting mode or a video mode, the front-facing camera and/or the rear-facing camera may receive external multimedia data. Each front-facing camera and rear-facing camera may be a fixed optical lens system or has focal length and optical zoom capability.

The audio component 1510 is configured to output and/or input audio signals. For example, the audio component 1510 includes a microphone (MIC) configured to receive an external audio signal when the device 1500 is in an operation mode, such as a call mode, a recording mode, and a voice recognition mode. The received audio signal may be further stored in the memory 1504 or transmitted via the communication component 1518. In some embodiments, the audio component 1510 further includes a speaker to output audio signals.

The I/O interface 1512 provides an interface between the processing component 1502 and peripheral interface modules, such as a keyboard, a click wheel, buttons, and the like. The buttons may include, but are not limited to, a home button, a volume button, a starting button, and a locking button.

The sensor component 1516 includes one or more sensors to provide status assessments of various aspects of the device 1500. For instance, the sensor component 1516 may detect an open/closed status of the device 1500, relative positioning of components, e.g., the display and the keypad, of the device 1500, a change in position of the device 1500 or a component of the device 1500, a presence or absence of user contact with the device 1500, an orientation or an acceleration/deceleration of the device 1500, and a change in temperature of the device 1500. The sensor component 1516 may include a proximity sensor configured to detect the presence of nearby objects without any physical contact. The sensor component 1516 may also include a light sensor, such as a Complementary Metal Oxide Semiconductor (CMOS) or Charge-Coupled Device (CCD) image sensor, for use in imaging applications. In some embodiments, the sensor component 1516 may also include an accelerometer sensor, a gyroscope sensor, a magnetic sensor, a pressure sensor, or a temperature sensor.

The communication component 1518 is configured to facilitate communication, wired or wirelessly, between the device 1500 and other devices. The device 1500 may access a wireless network based on a communication standard, such as Wi-Fi, 2G, 3G, 4G, 5G or 6G, or a combination thereof. In an exemplary embodiment, the communication component 1518 receives a broadcast signal or broadcast associated information from an external broadcast management system via a broadcast channel. In an exemplary embodiment, the communication component 1518 further includes a Near Field Communication (NFC) module to facilitate short-range communication. For example, the NFC module may be implemented based on a radio frequency Identification (RFID) technology, an Infrared Data Association (IrDA) technology, an Ultra-Wide Band (UWB) technology, a Blue Tooth (BT) technology, and other technologies.

In an exemplary embodiment, the device 1500 may be implemented with one or more of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the method described above on the terminal side.

In an exemplary embodiment, there is also provided a non-transitory computer-readable storage medium including instructions, such as the memory 1504, executable by the processor 1520 in the device 1500, for performing the above methods. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes may be made without departing from the scope thereof. It is intended that the scope of the disclosure only be limited by the appended claims.

## Claims

1. A session release method, performed by an Access and Mobility Management Function (AMF) device, comprising:
in response to receiving an Artificial Intelligence (AI) session release request message sent by a terminal, sending the AI session release request message to a Session Management Function (SMF) device;
sending an N2 resource release request message to a Radio Access Network (RAN) based on an AI session release response message returned by the SMF device, wherein the N2 resource release request message at least comprises a first resource release request message, and the first resource release request message is used to request the RAN to release resources for an AI session between the RAN and the terminal;
performing an AI session release update with the SMF device based on an N2 resource release response message returned by the RAN;
after receiving an AI session release status notification message sent by the SMF device, sending an AI session release result included in the AI session release status notification message to the terminal; and
in response to receiving an acknowledgement message, sent based on the AI session release result by the terminal, for acknowledging that a release of an AI session is completed, determining that the release of the AI session is completed.

2. The method of claim 1, wherein the AI session release request message comprises an AI session identifier of an AI session to be released or an AI session group identifier of an AI session group to be released.

3. The method of claim 2, wherein the AI session release request message further comprises AI session association information of an AI session to be released.

4. The method of claim 1, wherein sending the AI session release request message to the SMF device comprises:
calling a session context update request service, corresponding to an AI function, on the SMF device, to send an AI session context release request message to the SMF device, wherein the AI session context release request message comprises the AI session release request message that has been sent by the terminal to the AMF device.

5. The method of claim 1, wherein the AI session release response message comprises at least two containers, the at least two containers are used to carry the first resource release request message and a second resource release request message, respectively, the second resource release request message is used to request the terminal to release resources for an AI session between the terminal and the RAN; and
the N2 resource release request message comprises the second resource release request message sent by the SMF device to the AMF device.

6. The method of claim 5, wherein after performing the AI session release update with the SMF device based on the N2 resource release response message returned by the RAN, the method further comprises:
in response to receiving an N2 uplink Non-Access Stratum (NAS) transport message from the RAN, re-performing the AI session release update with the SMF device, wherein the N2 uplink NAS transport message comprises an AI session resource release acknowledgement message sent by the terminal.

7. The method of claim 1, wherein performing the AI session release update with the SMF device based on the N2 resource release response message returned by the RAN comprises:
sending an AI session context update request message to the SMF device, wherein the AI session context update request message comprises a container for carrying the N2 resource release response message; and
receiving an AI session context update response message returned by the SMF device, wherein the AI session context update response message is used to indicate that the SMF device has received an indication for performing a session update service.

8. A session release method, performed by a Session Management Function (SMF) device, comprising:
in response to receiving an Artificial Intelligence (AI) session release request message sent by an Access and Mobility Management Function (AMF) device, sending an AI session release response message to the AMF device, wherein the AI session release request message is sent by a terminal to the AMF device;
performing an AI session release update with the AMF device; and
sending a release notification message to a Unified Data Management (UDM) device after sending an AI session release status notification message to the AMF device, wherein the AI session release status notification message comprises an AI session release result, and the release notification message is used to trigger the UDM device to release data related to an AI session.

9. The method of claim 8, wherein the AI session release request message comprises an AI session identifier to be released or an AI session group identifier to be released.

10. The method of claim 9, wherein the AI session release request message further comprises AI session association information of an AI session to be released.

11. The method of claim 8, wherein the AI session release response message comprises at least two containers, the at least two containers are used to carry a first resource release request message and a second resource release request message, respectively, the first resource release request message is used to request a Radio Access Network (RAN) to release resources for an AI session between the RAN and the terminal, and the second resource release request message is used to request the terminal to release resources for an AI session between the terminal and the RAN.

12. The method of claim 8, wherein performing the AI session release update with the AMF device comprises:
receiving an AI session context update request message sent by the AMF device, wherein the AI session context update request message comprises a container for carrying an N2 resource release response message, and the N2 resource release response message is sent to the AMF device by a RAN; and
sending an AI session context update response message to the SMF device, wherein the AI session context update response message is used to indicate that the SMF device has received an indication for performing a session update service.

13. The method of claim 8, wherein the AI session release update is performed with the AMF device at least two times.

14. A session release method, performed by a Radio Access Network (RAN), comprising:
receiving an N2 resource release request message sent by an Access and Mobility Management Function (AMF) device, wherein the N2 resource release request message at least comprises a first resource release request message, and the first resource release request message is used to request the RAN to release resources for an AI session between the RAN and a terminal;
releasing the resources for the AI session between the RAN and the terminal based on the first resource release request message; and
sending an N2 resource release response message to the AMF device after releasing the resources for the AI session between the RAN and the terminal.

15. The method of claim 14, wherein the N2 resource release request message further comprises a second resource release request message sent by a Session Management Function (SMF) device to the AMF device, the second resource release request message is used to request the terminal to release resources for an AI session between the terminal and the RAN; and
the method further comprises:
sending the second resource release request message to the terminal; and
in response to receiving an AI session resource release acknowledgement message returned based on the second resource release request message by the terminal, sending an N2 uplink Non-Access Stratum (NAS) transport message to the AMF device, wherein the N2 uplink NAS transport message comprises the AI session resource release acknowledgement message sent by the terminal to the RAN.

16. A session release method, performed by a terminal, comprising:
in response to determining that a use of an Artificial Intelligence (AI) function service is completed, sending an AI session release request message to an Access and Mobility Management Function (AMF) device;
after receiving a second resource release message sent by a Radio Access Network (RAN), releasing resources for an AI session between the terminal and the RAN, wherein the second resource release message is used to request the terminal to release the resource for the AI session between the terminal and the RAN;
after releasing the resources for the AI session between the terminal and the RAN, sending an AI session resource release acknowledgement message to the RAN; and
in response to receiving an AI session release result from the AMF device, sending an acknowledgement message for acknowledging that a release of the AI session is completed to the AMF device.

17. The method of claim 16, wherein the AI session release request message comprises an AI session identifier of an AI session to be released or an AI session group identifier of an AI session group to be released.

18. The method of claim 17, wherein the AI session release request message further comprises AI session association information of an AI session to be released.

19. A session release apparatus, applied to an Access and Mobility Management Function (AMF), comprising:
a first sending module, configured to, in response to receiving an Artificial Intelligence (AI) session release request message sent by a terminal, send the AI session release request message to a Session Management Function (SMF) device;
a second sending module, configured to send an N2 resource release request message to a Radio Access Network (RAN) based on an AI session release response message returned by the SMF device, wherein the N2 resource release request message at least comprises a first resource release request message, and the first resource release request message is used to request the RAN to release resources for an AI session between the RAN and the terminal;
a first session release update module, configured to perform an AI session release update with the SMF device based on an N2 resource release response message returned by the RAN;
a third sending module, configured to, after receiving an AI session release status notification message sent by the SMF device, send an AI session release result included in the AI session release status notification message to the terminal; and
a determining module, configured to, in response to receiving an acknowledgement message for acknowledging that a release of an AI session is completed sent a based on the AI session release result by the terminal, determine that the release of the AI session is completed.

20. A session release apparatus, applied to a Session Management Function (SMF) device, comprising:
a fourth sending module, configured to, in response to receiving an Artificial Intelligence (AI) session release request message sent by an Access and Mobility Management Function (AMF) device, send an AI session release response message to the AMF device, wherein the AI session release request message is sent by a terminal to the AMF device;
a second session release update module, configured to perform an AI session release update with the AMF device; and
a fifth sending module, configured to send a release notification message to a Unified Data Management (UDM) device after sending an AI session release status notification message to the AMF device, wherein the AI session release status notification message comprises an AI session release result, and the release notification message is used to trigger the UDM device to release data related to an AI session.

21. A session release apparatus, applied to a Radio Access Network (RAN), comprising:
a first receiving module, configured to receive an N2 resource release request message sent by an Access and Mobility Management Function (AMF) device, wherein the N2 resource release request message at least comprises a first resource release request message, and the first resource release request message is used to request the RAN to release resources for an AI session between the RAN and a terminal;
a first resource release module, configured to release the resources for the AI session between the RAN and the terminal based on the first resource release request message; and
a sixth sending module, configured to send an N2 resource release response message to the AMF device after releasing the resources for the AI session between the RAN and the terminal.

22. A session release apparatus, applied to a terminal, comprising:
a seventh sending module, configured to, in response to determining that a use of an Artificial Intelligence (AI) function service is completed, send an AI session release request message to an Access and Mobility Management Function (AMF) device;
a second resource release module, configured to, after receiving a second resource release message sent by a Radio Access Network (RAN), release resources for an AI session between the terminal and the RAN, wherein the second resource release message is used to request the terminal to release the resource for the AI session between the terminal and the RAN;
an eighth sending module, configured to, after releasing the resources for the AI session between the terminal and the RAN, send an AI session resource release acknowledgement message to the RAN; and
a ninth sending module, configured to, in response to receiving an AI session release result from the AMF device, send an acknowledgement message for acknowledging that a release of the AI session is completed to the AMF device.

23. A computer-readable storage medium having a computer program stored thereon, wherein the computer program is used to implement the session release method of any one of claims 1 to 7.

24. A computer-readable storage medium having a computer program stored thereon, wherein the computer program is used to implement the session release method of any one of claims 8 to 13.

25. A computer-readable storage medium having a computer program stored thereon, wherein the computer program is used to implement the session release method of claim 14 or 15.

26. A computer-readable storage medium having a computer program stored thereon, wherein the computer program is used to implement the session release method of any one of claims 16 to 18.

27. A session release device, comprising:
a processor; and
a memory for storing instructions executable by the processor;
wherein the processor is configured to execute the executable instructions to perform the session release method of any one of claims 1 to 7.

28. A session release device, comprising:
a processor; and
a memory for storing instructions executable by the processor;
wherein the processor is configured to execute the executable instructions to perform the session release method of any one of claims 8 to 13.

29. A session release device, comprising:
a processor; and
a memory for storing instructions executable by the processor;
wherein the processor is configured to execute the executable instructions to perform the session release method of claim 14 or 15.

30. A session release device, comprising:
a processor; and
a memory for storing instructions executable by the processor;
wherein the processor is configured to execute the executable instructions to perform the session release method of any one of claims 16 to 18.
